# EUROPEAN PATENT APPLICATION

(11) **EP 4 807 151 A1**
(43) Date of publication of application: **16.09.2026**
(21) Application number: 24887626.0
(22) Date of filing: 11.09.2024
(51) Int. Cl.: F01M 1/02, F02D 29/06

(54) **RANGE EXTENDER LUBRICATION METHOD AND APPARATUS, AND HYBRID VEHICLE**

(30) Priority: 10.11.2023 CN 202311502538
(71) Applicant: Dongfeng Motor Group Co., Ltd., Wuhan, Hubei 430000 (CN)
(72) Inventor: WEI, Shuang, Wuhan, Hubei 430000 (CN); YAN, Yang, Wuhan, Hubei 430000 (CN); HAN, Chang, Wuhan, Hubei 430000 (CN); ZHANG, Song, Wuhan, Hubei 430000 (CN); ZHANG, Hongxia, Wuhan, Hubei 430000 (CN)
(74) Representative: Valet Patent Services Limited
(86) International application number: PCT/CN2024/118351
(87) International publication number: WO 2025/098008

(57) **Abstract**

Provided are a lubrication method and apparatus for a range extender, and a hybrid vehicle. The lubrication method comprises: acquiring a first duration during which a range extender is not started; and sending, when the first duration is greater than a first preset duration, a first instruction to an electric lubrication apparatus, wherein the first instruction is configured to instruct the electric lubrication apparatus to perform a forced lubrication operation.

## Description

### CROSS-REFERENCE TO RELATED APPLICATION

This application claims priority of the Chinese patent application No. 202311502538.8, filed on November 10, 2023, the entire contents of which are incorporated herein by reference.

### TECHNICAL FIELD

The invention relates to a technical field of vehicle engineering, and in particular to a lubrication method and apparatus for a range extender, and a hybrid vehicle.

### BACKGROUND

A range extender of a hybrid vehicle includes an engine and a generator. The engine outputs a torque to drive the generator to produce electricity, and the generator charges a battery and powers a drive motor. When an electric quantity of the vehicle is low, the range extender can be activated to recharge the vehicle. When the range extender operates, the engine and the generator of the range extender operate to drive a mechanical oil pump to work. For example, a drive gear of the engine drives a gear on the mechanical oil pump to rotate, pumping an engine oil from an oil pan to an internal friction pair. If the range extender remains inactive for a long time, the friction pairs inside the range extender may experience relative vibration without lubrication engine oil, potentially causing damages to various friction pairs inside the range extender.

### SUMMARY

In view of this, embodiments of the invention are intended to provide a lubrication method and apparatus for a range extender, and a hybrid vehicle, so as to solve the technical problem that when the range extender does not operate, internal friction pairs are damaged along with a movement of whole vehicle.

To achieve the above objective, the technical solutions of the embodiments of the invention are implemented as follows:

The invention provides a lubrication method for a range extender. The lubrication method includes: acquiring a first duration during which a range extender is not started; and sending, when the first duration is greater than a first preset duration, a first instruction to an electric lubrication apparatus, wherein the first instruction is used to instruct the electric lubrication apparatus to perform a forced lubrication operation.

In an embodiment, the lubrication method further includes: resetting, after sending the first instruction to the electric lubrication apparatus, the first duration to be zero, and starting to re-record the first duration.

In an embodiment, the forced lubrication operation performed by the electric lubrication apparatus includes: the electric lubrication apparatus continuously operating at a first rotation speed for a first working duration and then being stopped.

In an embodiment, the lubrication method further includes: when it is determined that there is a start demand for the range extender, sending a second instruction to the electric lubrication apparatus, optionally, the second instruction is used to instruct the electric lubrication apparatus to perform a lubrication operation.

In an embodiment, the lubrication operation performed by the electric lubrication apparatus comprises: the electric lubrication apparatus continuously operating for a second working duration and then being stopped.

In an embodiment, the lubrication method further includes: resetting, when the second working duration is greater than a second preset duration, the first duration to be zero, and starting to re-record the first duration.

In an embodiment, the lubrication operation performed by the electric lubrication apparatus further comprises: the electric lubrication apparatus operating at a second rotation speed.

In an embodiment, the acquiring the first duration during which the range extender is not started includes: acquiring a time signal and a time validity signal of an on-board telematics controller; and determining the first duration according to the time signal and the time validity signal.

In an embodiment, the lubrication method further includes: acquiring an ambient temperature, and determining the first preset duration based on the ambient temperature.

The invention further provides a lubrication apparatus for a range extender, including: an acquisition unit, configured to acquire a first duration during which a range extender is not started; an electric lubrication apparatus, configured to deliver engine oil to a friction pair of the range extender; and a control unit, configured to send a first instruction to the electric lubrication apparatus when the first duration is greater than a first preset duration, wherein the first instruction is used to instruct the electric lubrication apparatus to perform a forced lubrication operation.

The invention further provides a hybrid vehicle, including the lubrication system with the above electric lubrication apparatus.

With the lubrication method provided by the invention, the electric lubrication apparatus is controlled according to the first duration during which the range extender is not started. When the first duration during which the range extender is not started is greater than the first preset duration, the friction pairs inside the range extender may be lack of lubrication engine oil. By controlling the electric lubrication apparatus to perform a forced lubrication operation, a risk of damage to the friction pairs caused by the movement with the whole vehicle in the absence of lubrication engine oil is reduced, and a reliability of the range extender is improved. At the same time, there is no need to start the range extender during the forced lubrication process, and thus a driving experience of the user will not be affected and a satisfaction of user can be improved.

### BRIEF DESCRIPTION OF DRAWINGS

FIG. 1 is a schematic flow chart of a lubrication method for a range extender according to an embodiment of the invention;
FIG. 2 is a schematic flow chart of a lubrication method for a range extender according to an embodiment of the invention;
FIG. 3 is a schematic diagram of a composition structure of a lubrication apparatus for a range extender according to an embodiment of the invention; and
FIG. 4 is a schematic diagram of a composition structure of a hybrid vehicle according to an embodiment of the invention.

### DETAILED DESCRIPTION

The technical solutions in the embodiments of the invention will be clearly and completely described below in conjunction with the embodiments of the invention and the accompanying drawings. Obviously, the described embodiments are only some e embodiments of the invention, rather than all of the embodiments. All other embodiments obtained by those skilled in the art based on the embodiments of the invention without creative efforts shall fall within the protection scope of the invention.

In the following description, numerous specific details are given to provide a more thorough understanding of the invention. However, it is apparent to those skilled in the art that the invention may be practiced without one or more of these details. In other examples, some technical features well known in the art are not described in order to avoid confusion with the invention; that is, not all features of the actual embodiments are described herein, and well-known functions and structures are not described in detail.

In the accompanying drawings, the dimensions of layers, regions, elements and their relative dimensions may be exaggerated for clarity. Like reference numerals refer to like elements throughout.

It will be understood that when an element or layer is referred to as being "on", "adjacent to", "connected to" or "coupled to" another element or layer, it can be directly on, adjacent to, connected to or coupled to the other element or layer, or intervening elements or layers may be present. In contrast, when an element is referred to as being "directly on", "directly adjacent to", "directly connected to" or "directly coupled to" another element or layer, there are no intervening elements or layers present. It will be understood that, although the terms first, second, third, etc. may be used to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the invention. The discussion of a second element, component, region, layer or section does not imply that a first element, component, region, layer or section is necessarily present in the present disclosure.

Spatially relative terms, such as "under", "below", "lower", "beneath", "above", "upper" and the like, may be used herein for ease of description to describe the relationship of one element or feature to another element or feature as illustrated in the figures. It will be understood that the spatially relative terms are intended to encompass different orientations of the device in use and operation in addition to the orientation depicted in the figures. For example, if the device in the figures is turned over, elements or features described as "below" or "beneath" other elements would then be oriented "above" the other elements. Thus, the exemplary terms "below" and "beneath" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will also be understood that the terms "comprise" and/or "include", when used in this specification, specify the presence of stated features, integers, steps, operations, elements, components and/or groups, but do not preclude the presence or addition of one or more other features, integers, steps, operations, elements, components and/or groups. As used herein, the term "and/or" includes any and all combinations of the associated listed items.

For a thorough understanding of the invention, detailed steps and detailed structures will be provided in the following description to explain the technical solutions of the invention. Preferred embodiments of the invention are described in detail below; however, the invention may have other embodiments in addition to these detailed descriptions.

It should be noted that, in the case of no conflict, the embodiments in the invention and the technical features in the embodiments may be combined with each other. The detailed description in the specific embodiments should be understood as an explanation of the purpose of the invention, and should not be regarded as an improper limitation on the invention.

Before describing the embodiments of the invention in further detail, terms and terminologies involved in the embodiments of the invention are explained, and the terms and terminologies involved in the embodiments of the invention are applicable to the following explanations.

A range extender generally includes an engine and a generator. When a battery power of a vehicle is insufficient, the range extender can be started, through converting an energy generated from a combustion of gasoline or other fuel into an electric energy, to provide additional electric energy for an electric vehicle.

A friction pair: a system formed by two parts whose surfaces are in direct contact and generate relative friction is called a friction pair. With the technological development, a pure electric cruising range of hybrid vehicles is continuously improved, even reaching up to 200 kilometers, which can fully meet daily commuting needs of users.

The inventors have found that, in cases where the user has no demand for long-distance driving, the hybrid vehicle may be driven in pure electric mode for a long time, while there is no start demand for the range extender equipped on the hybrid vehicle for a long time, and will not lubricate an internal friction pair thereof. However, during a long period of pure electric driving, the friction pairs inside the range extender may undergo relative motion without lubricating oil, leading to damage.

If, during pure electric driving, the range extender is forcibly started to pump the lubrication engine oil to various parts inside the range extender for lubrication, a noise generated by sudden start of the range extender may affect the driving experience of the users thereby reducing satisfaction of the users.

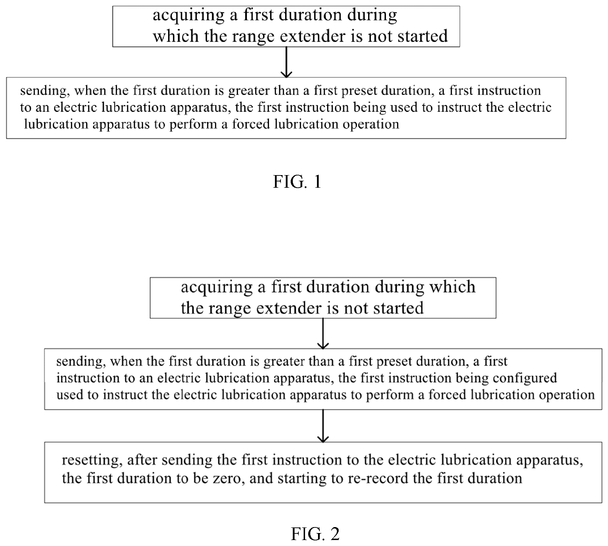

Based on the above technical problems, the embodiments of the invention provide a lubrication method for a range extender which may be executed by a Vehicle Control Unit (VCU), a Motor Control Unit (MCU), or the like. As shown in FIG. 1, the lubrication method for a range extender includes:
Step S101, acquiring a first duration during which a range extender is not started; and
Step S102, sending, when the first duration is greater than a first preset duration, a first instruction to an electric lubrication apparatus. The first instruction is configured to instruct the electric lubrication apparatus to perform a forced lubrication operation.

The range extender is a supplementary power source for a hybrid vehicle. When a power of power battery is insufficient, the vehicle operates in a range extension mode, and the range extender generates electrical energy to charge the power battery. When the power of the power battery is sufficient, the vehicle operates in a pure electric mode, and the power battery supplies power to whole vehicle without starting the range extender.

If the vehicle keeps operating in the pure electric mode for a long time, the range extender will face a situation that it does not need to be started for a long time. Exemplarily, taking a daily commuting distance of 20 kilometers for going to and from work, a pure electric cruising range of 200 kilometers can fully satisfy a user driving in the pure electric mode for a week, and continue to let the vehicle, after being charged, operate in the pure electric mode.

Since the range extender has not been started for a long time, the engine oil inside the range extender will accumulate in an oil pan, and the engine oil on a surface of the friction pairs is insufficient and thus lubrication requirements can not be met. At this time, if the range extender still moves with the whole vehicle, parts directly contacting with one another inside the range extender generate relative vibration resulting in dry friction, and thus a damage is very likely to be caused to the friction pairs. To reduce the occurrence of the above damage, it is necessary to establish a pressure of engine oil before dry friction occurs, so that the surfaces of the friction pairs are fully lubricated. By comparing the first duration during which the range extender is not started, and the first preset duration, it can be determined whether the electric lubrication apparatus needs to be performed a forced lubrication thereon.

In actual implementation, the first preset duration may be obtained through a bench test. Exemplarily, it can be determined through the vibration amplitude of the bench test: the friction pairs need to be lubricated after a hybrid vehicle is driven in pure electric mode for a period of time, such as 30 days, the friction pairs need to be lubricated. That is, the first preset duration is determined to be 30 days. When the first duration is greater than 30 days, a first instruction is sent to the electric lubrication apparatus, and the electric lubrication apparatus operates according to the first instruction to pump and deliver an engine oil to various friction pairs of the range extender to complete a lubrication operation. The above first duration may be calculated according to the actual days of pure electric driving, such as 30 days or 45 days; or may be calculated according to the duration during which the range extender is not started in a condition that the hybrid vehicle is in a starting state or a total duration of pure electric driving, for example, 500 hours of pure electric driving.

In some embodiments, the lubrication method further includes: acquiring an ambient temperature, and determining the first preset duration based on the ambient temperature.

In actual implementation, the first preset duration may be obtained through a bench test. Exemplarily, it is determined through the vibration amplitude in tests at different ambient temperatures. The lower the ambient temperature is, the shorter the corresponding first preset duration is. When the ambient temperature is less than zero degrees Celsius, the first preset duration may be set to be 20 days. When the first duration during which the range extender is not started is greater than 20 days, a first instruction is sent to the electric lubrication apparatus, and the electric lubrication apparatus operates according to the first instruction to pump and deliver an engine oil to various friction pairs of the range extender to complete the lubrication operation.

With the lubrication method provided by the invention, the electric lubrication apparatus is controlled according to the first duration during which the range extender is not started. When the first duration during which the range extender is not started is greater than the first preset duration, the friction pairs inside the range extender may be lack of lubrication engine oil. By controlling the electric lubrication apparatus to perform a forced lubrication operation, a risk of damage to the friction pairs caused by the movement with the whole vehicle in the absence of lubrication engine oil is reduced, and a reliability of the range extender is improved. At the same time, there is no need to start the range extender during the forced lubrication process, and thus a driving experience of the user will not be affected and a satisfaction of user can be improved.

In some embodiments, the acquiring the first duration during which the range extender is not started includes: acquiring a time signal and a time validity signal of an on-board telematics controller; and determining the first duration according to the time signal and the time validity signal.

In actual implementation, the on-board telematics controller may be a Telematics Box (TBOX). The time signal may include year, month, day, hour, minute and second. The time validity signal (for example, timeValid) may include a time validity signal (for example, timeValid=VALID) for identifying that a time is valid and a time validity signal (for example, timeValid=INVALID) for identifying that a time is invalid.

Specifically, when the TBOX cannot acquire or transmit the time signal (for example, when a network is disconnected or restarted), the TBOX sends the time validity signal timeValid=INVALID by default. When the TBOX can acquire and transmit the time signal, the TBOX sends a real-time time signal and the time validity signal timeValid=VALID, and calculates the first duration during which the range extender is not started through the time signal.

In an embodiment, when the real-time time signal T and the time validity signal timeValid=VALID are received at the same time, a difference duration ΔT between a current time signal T and a time T0 when the first duration was zero last time is calculated, and the first duration is updated to be the difference duration ΔT. The first duration during which the range extender is not started is calculated only when the time signal is marked as valid, thereby avoiding a calculation error of the first duration during which the range extender is not started caused by that the time signal T may be temporarily restored to be a factory time in a case of network disconnection or restart.

In some embodiments, the forced lubrication operation performed by the electric lubrication apparatus includes: the electric lubrication apparatus continuously operating at a first rotation speed for a first working duration and then being stopped.

In actual implementation, the first rotation speed may be determined according to a maximum rotation speed of the electric lubrication apparatus. It should be noted that the electric lubrication apparatus may be controlled by a Pulse Width Modulation (PWM) signal sent by the control unit, that is, different rotation speeds are obtained by modulating a duty cycle. When other conditions are the same, the larger the duty cycle is, the higher the rotation speed of the electric lubrication apparatus is. When the duty cycle is 0, the rotation speed of the electric lubrication apparatus is 0. When the duty cycle is 1, the electric lubrication apparatus has the maximum rotation speed.

In an embodiment, the rotation speed of the electric lubrication apparatus corresponding to the duty cycle equal to 1 may be set as the first rotation speed. Considering that when the duty cycle, after being greater than 0.8, is continuously increased, an increase amplitude of the rotation speed of the electric lubrication apparatus is small, and thus the rotation speed corresponding to the duty cycle equal to 0.8 may also be set as the first rotation speed.

It should be noted that the first working duration may be a single working duration of the electric lubrication apparatus.

In actual implementation, the first working duration may be determined through a bench test. Exemplarily, a shortest time within which a target oil pressure is successfully established with the maximum rotation speed of the electric lubrication apparatus is set as the first working duration (for example, 2 minutes). If the first working duration is too short, the oil pressure may not be successfully established, and it is difficult to achieve an effect of lubricating the internal friction pairs. If the first working duration is too long, it may lead to repeated starts of the electric lubrication apparatus. The first working duration determined by this method can not only enable the oil pressure to be successfully established, but also reduce an operation time of the electric lubrication apparatus. It will neither reduce the lubrication effect due to insufficient engine oil pressure, nor cause excessive loss of the electric lubrication apparatus due to excessive engine oil pressure.

In some embodiments, as shown in FIG. 2, the lubrication method for a range extender further includes:
Step S103, resetting, after sending the first instruction to the electric lubrication apparatus, the first duration to be zero, and starting to re-record the first duration.

Specifically, after the electric lubrication apparatus continuously operates at the first rotation speed for the first working duration, that is, after a forced lubrication work is completed, the first duration during which the range extender is not started is reset to be zero.

In some embodiments, the lubrication method further includes: sending, when it is determined that there is a start demand for the range extender, a second instruction to the electric lubrication apparatus, the second instruction being configured to instruct the electric lubrication apparatus to perform a lubrication operation.

In an embodiment, when an electric quantity of the hybrid vehicle is insufficient, for example, when an electric energy of a power battery is lower than a preset value, it is determined that there is a start demand for the range extender, and the range extender starts to work and provide electric energy.

In some embodiments, the lubrication operation performed by the electric lubrication apparatus further includes: the electric lubrication apparatus operates at a second rotation speed.

In actual implementation, after the range extender is started, the electric lubrication apparatus starts to perform a lubrication operation, so that the engine oil is circulated continuously in a lubricating oil circuit to meet lubrication requirements during an operation of the range extender. The second rotation speed of the electric lubrication apparatus may be determined by a plurality of parameters, for example, a main oil gallery pressure, a water temperature of engine, and the like. During a start-up of the range extender, the second rotation speed may include a plurality of different rotation speeds. The control unit of the vehicle may adjust the duty cycle according to the actual requirements of various components to achieve a switching of the rotation speed. It should be noted that the second rotation speed in the embodiments of the invention may be less than or equal to the maximum rotation speed of the electric lubrication apparatus. A specific value of the second rotation speed is not limited.

In some embodiments, the lubrication operation performed by the electric lubrication apparatus includes: the electric lubrication apparatus continuously operating for a second working duration and then being stopped.

In some embodiments, when the second working duration is greater than a second preset duration, the first duration is reset to be zero, and the first duration is started to be re-recorded, optionally, the second preset duration is greater than the first working duration.

Optionally, after the electric lubrication apparatus operates for the second working duration, it is determined whether the second working duration is greater than the second preset duration. When the second working duration is greater than the second preset duration, i.e., it is determined that the electric lubrication apparatus has completed one lubrication operation, and the first duration during which the range extender is not started is reset to be zero and starts to be re-recorded. It is considered that the second rotation speed may change after the range extender is started. That is, the electric lubrication apparatus does not continuously operate at the maximum rotation speed during the operation of the range extender. In this case, during the electric lubrication apparatus operates continuously for the first operating duration, the oil pressure can not be successfully established. To meet the lubrication requirements, the second preset duration may be set to be greater than the first working duration. Optionally, the second preset duration may also be determined through a bench test. Exemplarily, the second preset duration may be set to be 6 minutes. When the second working duration is greater than 6 minutes, it can be determined that the oil pressure is successfully established, and the electric lubrication apparatus completes a lubrication operation.

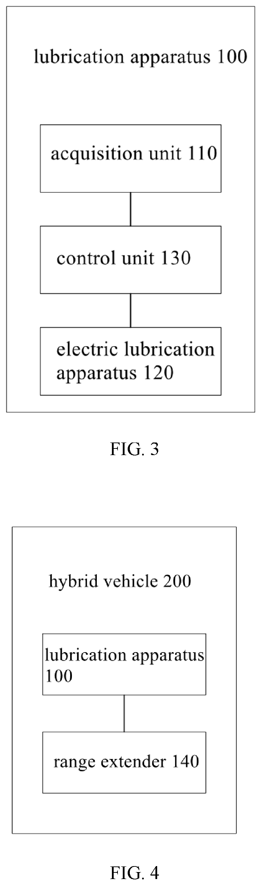

The invention further provides a lubrication apparatus for a range extender. As shown in FIG. 3, the lubrication apparatus 100 includes an acquisition unit 110, an electric lubrication apparatus 120 and a control unit 130. Optionally, the acquisition unit 110 is used to acquire a first duration during which the range extender is not started. The electric lubrication apparatus 120 is configured to deliver an engine oil to a friction pair of the range extender. The control unit 130 is configured to, when the first duration is greater than a first preset duration, send a first instruction to the electric lubrication apparatus 120, optionally, the first instruction is configured to instruct the electric lubrication apparatus 120 to perform a forced lubrication operation.

The control unit 130 controls the electric lubrication apparatus 120 according to the first duration during which the range extender is not started. When the first duration during which the range extender is not started is greater than the first preset duration, the friction pairs inside the range extender may be lack of lubrication engine oil. The control unit 130 controls the electric lubrication apparatus 120 to perform a forced lubrication operation, a risk of damage to the friction pairs caused by the movement with the whole vehicle in the absence of lubrication engine oil is reduced, and a reliability of the range extender is improved. At the same time, there is no need to start the range extender during the forced lubrication process, and thus a driving experience of the user will not be affected and a satisfaction of user can be improved.

The invention further provides a hybrid vehicle. As shown in FIG. 4, the hybrid vehicle 200 includes the range extender 140 and the lubrication apparatus 100 for the range extender in the above embodiments.

Those skilled in the art can understand that all or a portion of the steps of the above method embodiments may be implemented by hardware associated with program instructions. The aforementioned program may be stored in a computer-readable storage medium, and when the program is executed, the steps including the above method embodiments are performed. The aforementioned storage medium includes various media that can store program codes, such as a mobile storage device, a Read Only Memory (ROM), a magnetic disk, or an optical disk.

Alternatively, if the above integrated units of the invention are implemented in the form of software functional modules and sold or used as independent products, they may also be stored in a computer-readable storage medium. Based on such an understanding, the technical solutions of the embodiments of the invention, which are essentially or the part contributing to the related art, may be embodied in the form of a software product. The computer software product is stored in a storage medium, and includes several instructions to enable a computer device (which may be a personal computer, a server, a network device, or the like) to perform all or part of the methods described in the embodiments of the invention. The aforementioned storage medium includes various media that can store program codes, such as a mobile storage device, a ROM, a magnetic disk, or an optical disk.

Various embodiments/implementations provided in the invention may be combined with one another in the case of no conflict.

The above descriptions are only embodiments of the invention and are not intended to limit the invention. Various modifications and changes may be made to the present application by those skilled in the art. Any modification, equivalent replacement, improvement and the like made within the spirit and principle of the invention shall be included in the protection scope of the invention.

It should be understood that reference throughout the specification to "one embodiment" or "an embodiment" means that a particular feature, structure, or characteristic related to the embodiment is included in at least one embodiment of the invention. Thus, the appearances of the phrases "in one embodiment" or "in an embodiment" in various places throughout the specification are not necessarily all referring to the same embodiment. Furthermore, the particular features, structures, or characteristics may be combined in any suitable manner in one or more embodiments. It should be understood that, in various embodiments of the invention, the sequence numbers of the above processes do not mean the execution order, and the execution order of each process should be determined by its function and internal logic, and should not constitute any limitation on the implementation process of the embodiments of the invention. The serial numbers of the above embodiments of the invention are only for description, and do not represent the advantages and disadvantages of the embodiments.

The above descriptions are only the implementations of the invention, and are not intended to limit the patent scope of the invention. Any equivalent structural transformation made by using the contents of the description and drawings of the invention, or direct/indirect application in other related technical fields, shall be included in the patent protection scope of the invention.

## Claims

1. A lubrication method for a range extender, **characterized by** comprising:
acquiring a first duration during which the range extender is not started;
sending, when the first duration is greater than a first preset duration, a first instruction to an electric lubrication apparatus, wherein the first instruction is used to instruct the electric lubrication apparatus to perform a forced lubrication operation.

2. The lubrication method for the range extender according to claim 1, further comprising:
resetting, after sending the first instruction to the electric lubrication apparatus, the first duration to be zero, and starting to re-record the first duration.

3. The lubrication method for the range extender according to claim 2, wherein,
the forced lubrication operation performed by the electric lubrication apparatus comprises: the electric lubrication apparatus continuously operating at a first rotation speed for a first working duration and then being stopped.

4. The lubrication method for the range extender according to claim 3, further comprising:
sending, when it is determined that there is a start demand for the range extender, a second instruction to the electric lubrication apparatus, wherein the second instruction is used to instruct the electric lubrication apparatus to perform a lubrication operation; and
the lubrication operation performed by the electric lubrication apparatus comprises: the electric lubrication apparatus continuously operating for a second working duration and then being stopped.

5. The lubrication method for the range extender according to claim 4, further comprising:
resetting, when the second working duration is greater than a second preset duration, the first duration to be zero, and starting to re-record the first duration.

6. The lubrication method for the range extender according to claim 5, wherein,
the lubrication operation performed by the electric lubrication apparatus further comprises: the electric lubrication apparatus operating at a second rotation speed.

7. The lubrication method for the range extender according to claim 1, wherein,
the acquiring the first duration during which the range extender is not started comprises: acquiring a time signal and a time validity signal of an on-board telematics controller; and
determining the first duration according to the time signal and the time validity signal.

8. The lubrication method for the range extender according to claim 1, further comprising:
acquiring an ambient temperature, and determining the first preset duration based on the ambient temperature.

9. A lubrication apparatus for a range extender, **characterized by** comprising:
an acquisition unit configured to acquire a first duration during which the range extender is not started;
an electric lubrication apparatus configured to deliver an engine oil to a friction pair of the range extender; and
a control unit configured to send, when the first duration is greater than a first preset duration, a first instruction to the electric lubrication apparatus, wherein the first instruction is used to instruct the electric lubrication apparatus to perform a forced lubrication operation.

10. A hybrid vehicle, **characterized by** comprising:
a range extender; and
a lubrication apparatus for the range extender, configured to perform the lubrication method according to any one of claims 1 to 9.
